# EUROPÄISCHE PATENTANMELDUNG

(11) **EP 2 088 274 A2**
(43) Veröffentlichungstag der Anmeldung: **12.08.2009**
(21) Anmeldenummer: 09161551.8
(22) Anmeldetag: 19.04.2002
(51) Int. Cl.: E05F 15/12, E05F 1/10, F16F 9/02

(54) **Betätigungssystem für eine Klappe o. dergleichen**

(30) Priorität: 20.04.2001 DE 10119340
(62) Teilanmeldung aus: 02008864.7
(71) Anmelder: Stabilus GmbH, 56070 Koblenz (DE)
(72) Erfinder: Lauderbach, Leo, 56291, Steinbach (DE); Ritter, Andreas, 56206, Hilgert (DE)
(74) Vertreter: Herzog, Markus

(57) **Zusammenfassung**

Betätigungssystem, umfassend ein Basisteil und ein zu bewegendes Teil, das von einem unter einer Druckvorspannung stehende Kolben-Zylinderaggregat bewegbar ist, das einen Zylinder und eine Kolbenstange umfasst, wobei ein Kolben an der Kolbenstange den Zylinder in zwei Arbeitsräume unterteilt, wobei das Basisteil eine fremdenergiegesteuerte Antriebseinrichtung aufweist, die in Wirkverbindung mit dem zu bewegenden Bauteil steht und gegen die Betriebskraft des Kolben-Zylinderaggregat funktioniert, wobei ein Steuerungssystem die Bewegung des zu bewegenden Systems überwacht und ein Hindernis feststellt, wenn ein die Bewegung repräsentierender Parameter von einem gespeicherten Parameter von einer Schwellgrenze abweicht, wobei im stromlosen Zustand des Betätigungssystems das zu bewegenden Bauteil mit Hilfe einer Blockiereinrichtung gehalten wird, wobei die Blockiereinrichtung von dem Kolben-Zylinderaggregat gebildet wird, indem über ein Schaltventil eine Strömungsverbindung zwischen den Arbeitsräumen blockierbar ist.

## Beschreibung

Die Erfindung betrifft ein Betätigungssystem für eine Klappe o. dergleichen gemäß dem Oberbegriff von Patentanspruch 1.

Betätigungssysteme dieser Art verfügen über einen elektrischen Antrieb, der gegen die Kraft eines Federelements die Klappe oder auch eine Fahrzeugtür aus einer geöffneten Betriebsstellung in Richtung einer Schließstellung bewegt. Es kommt aber in der täglichen Praxis der Wunsch auf, dass die Klappe eine Zwischenstellung einnimmt und diese für einen längeren Zeitraum beibehält, insbesondere auch dann, wenn das Fahrzeug abgestellt wird. Um die Zwischenstellung der Klappe auch für einen längeren Zeitraum einhalten zu können, muss eine elektrisch betätigbare Kupplung als Teil des Betätigungssystems dauerhaft mit Strom versorgt werden. Bei abgestelltem Motor muss die Stromversorgung für die Kupplung damit zwangsläufig aus der Batterie des Fahrzeugs betrieben werden. Damit ist die Gefahr gegeben, dass bei einer übermäßig langen Phase des abgestellten Fahrzeugs mit einer Fahrzeugklappe in Zwischenstellung die Batterie derart belastet wird, dass ein Startvorgang des Motors gefährdet ist.

Um diesem Problem zu begegnen, hat man in dem Betätigungssystem nach der US 6 092 336 einen Freilauf in ein Getriebe für eine Seilaufwicklung vorgesehen. Wenn die Kupplung stromlos ist, dann verhindert der Freilauf, dass sich die Klappe weiter öffnen kann.

Aufgabe der vorliegenden Erfindung ist es, ein Betätigungssystem für ein bewegliches Teil, insbesondere eine Klappe zu realisieren, bei der eine Zwischenstellung der Klappe stromlos gehalten auf ein aufwendiges Getriebe verzichtet werden kann.

Erfindungsgemäß wird die Aufgabe dadurch gelöst, dass die Blockiereinrichtung von dem Kolben-Zylinderaggregat gebildet wird, indem über ein Schaltventil eine Strömungsverbindung zwischen den Arbeitsräumen blockierbar ist.

Damit wird erreicht, dass ein eventuell der Antriebseinrichtung zugeordnetes Getriebe wesentlich einfacher im Aufbau sein kann. Des weiteren lässt sich mit einem blockierbaren Kolben-Zylinderaggregat eine Bewegung des beweglichen Teils in beide Richtungen unterbinden.

Um einerseits eine hohe Haltekraft am beweglichen Teil und andererseits einen geringen Energieeinsatz für die Antriebseinrichtung zu erreichen ist vorgesehen, dass das Schaltventil ein zweistufiges Öffnungsverhalten aufweist, indem nach Überwinden einer größeren Deblockierkraft mit einer geringeren Offenhaltkraft eine Betriebsbewegung ausgeführt werden kann.

Bei einer einfacheren Steuerungsvariante des Systems wird unabhängig von einer Zwischenstellung die Schwellwertgrenze derart verschoben, dass die Deblockierkraft von der Antriebseinrichtung überwunden wird.

Bei einer etwas aufwändigeren Lösung weist das Steuersystem mindestens zwei Schwellwertgrenzen auf, wobei ein Schwellwert für ein Hindernis während der Bewegung des beweglichen Teils und ein zweiter Schwellwert von der Antriebseinrichtung überwunden wird, wenn das Teil aus dem Stillstand in Bewegung gesetzt wird. Damit wird ein feineres Ansprechen der Hinderniserkennung für das bewegliche Teil erreicht.

Bei einer Alternativlösung weist das Schaltventil einen elektrischen Aktuator auf, der bei stillstehendem Fahrzeugmotor von der Stromversorgung eines Generators abgetrennt ist und in eine Blockierstellung bewegt wird. Sobald der Fahrzeugmotor steht, wird stromlos die Blockierwirkung erreicht. Während des Fahrzeugbetriebs steht eine ausreichende Stromversorgung zur Verfügung, umdas Schaltventil, wenn es sein muss, permanent offen zu halten.

Für den Fall, dass man auch bei stehendem Fahrzeugmotor das Schaltventil betätigen will, ist der Stromversorgung des Generators eine Stromversorgung aus einer Batterie zuschaltbar.

Anhand der folgenden Figurenbeschreibung soll die Erfindung näher beschrieben werden.

### Es zeigt:

- Fig. 1: Prinzipdarstellung des Gesamtsystems
- Fig. 2: Betätigungssystem
- Fig. 3 u. 4: Eine Ausführungsform eins Kolben-Zylinderaggregates
- Fig. 5: Kolben-Zylinderaggregat mit elektromagnetisch betätigbarem Schalt-Ventil.

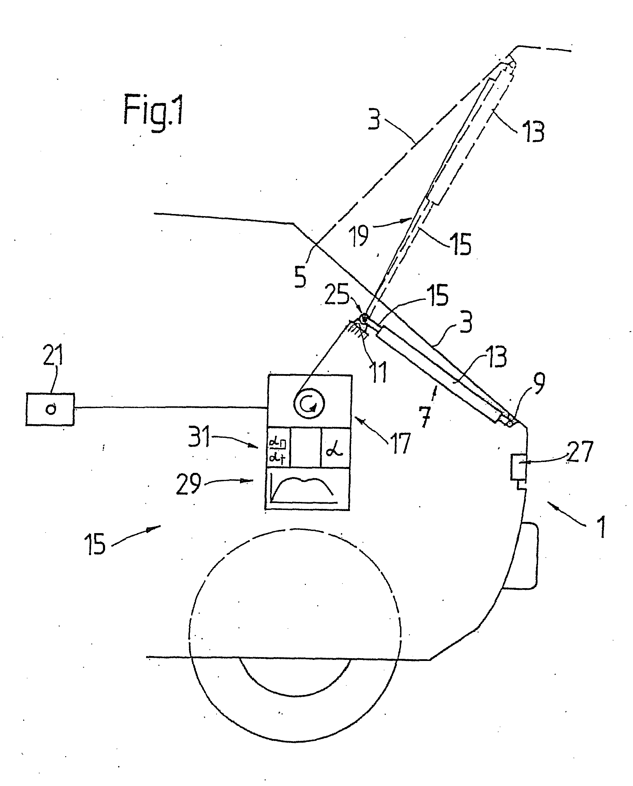

Die Figur 1 zeigt eine Prinzipskizze eines Kraftfahrzeuges mit einer Karosserie als Basisteil 1 und einem beweglichen Teil 3 in der Ausführung einer Heckklappe, im folgenden nur noch Klappe genannt, da es sich auch um eine

Fronthaube, eine Fahrzeugtür oder entsprechende Anwendungsfälle handeln kann.

Die Klappe 3 ist in einer quer zum Fahrzeug verlaufenden Achse 5 gelagert. Mindestens ein Kolben-Zylinderaggregat 7 übt auf die Klappe 3 eine Kraft in Öffnungsrichtung aus. Bei dem Kolben-Zylinderaggregat handelt es sich bevorzugt um eine Gasfeder, die ggf. eine Endlagendämpfung aufweist. Das Kolben-Zylinderaggregat ist über Anschlussorgane 9; 11 an dem Basisteil und an der Klappe befestigt. Als Hauptkomponenten des Kolben-Zylinderaggregat sind ein Zylinder 13 und eine Kolbenstange 15 dargestellt. Bevorzugt werden zwei Kolben-Zylinderaggregate für die Öffnungsbewegung der Klappe 5 verwendet werden. Man kann ein Kolben-Zylinderaggregat nach der DE 29 50 888 A1 und ein Kolben-Zylinderaggregat gemäß der DE 197 34 466 C1 oder der DE 199 38 699 A1 ausführen.

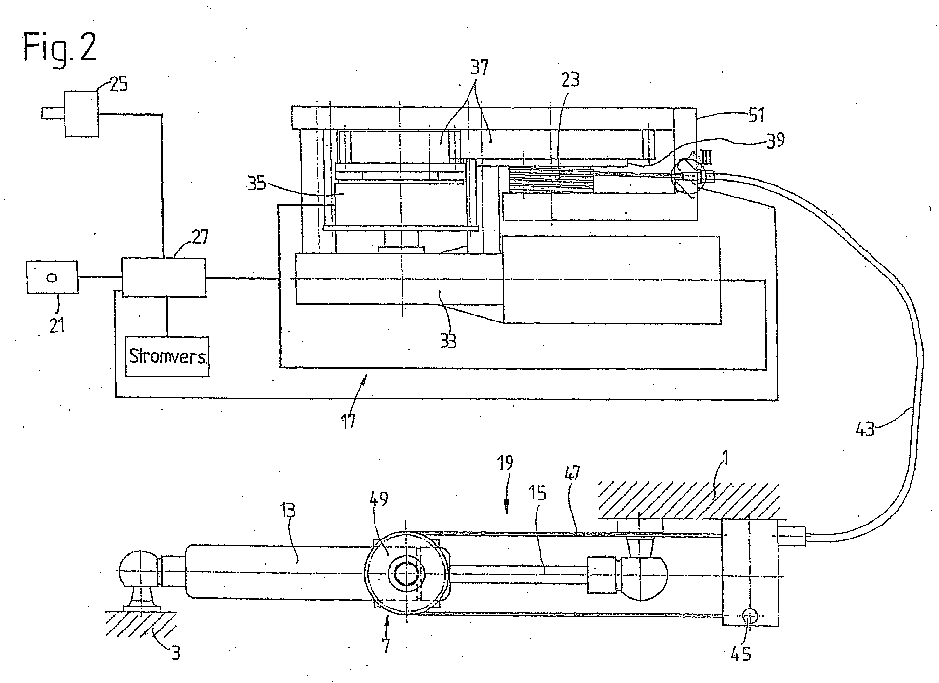

Die Schließbewegung der Klappe übernimmt ein Betätigungssystem 15, das eine Antriebseinrichtung 17 umfaßt. Diese Antriebseinrichtung steht über eine Seileinrichtung 19 mit der Klappe 3 in Wirkverbindung. Wird die Antriebseinrichtung über eine Fernbedienung 21 initiiert, dann treibt die Antriebseinrichtung eine Wickeleinrichtung 23 (s. Fig. 2) an, so dass die Klappe gegen die Kraft des Kolben-Zylinderaggregates in Schließrichtung bewegt wird. Die Fernbedienung ist mit einer Tip-Auslösung ausgerüstet, die mit einem Dauersignal verbunden ist, bis eine Endstellung, eine neue Tip-Auslösung zum Anhalten der Klappe oder ein Hindernis vorliegt. Deshalb benötigt die Tip-Auslösung nur einen Taster.

Ein Sensor 25, bevorzugt ein Drehpotentiometer, sensiert die Klappenbewegung bis zu einem Winkelbereich, bei dem ein Klappenschloß 27 einrastet. Man kann den Sensor 25 an der Achse 5, den Anschlußorganen 9; 11 oder im Bereich der Antriebseinrichtung anordnen. Beim erstmaligen Betätigen der Klappe speichert ein Steuerungssystem 29 Messpunkte ab, die die Bewegung der Klappe repräsentieren. Bei diesen Messpunkten handelt es sich um Winkelangaben der Klappenstellung in Verbindung mit der Momentandrehzahl des Sensors. Das Steuerungssystem ermittelt das Differential aus Momentandrehzahl bezogen auf die Zeit und kann durch Verwendung einer Vergleichseinheit 31 Unstetigkeiten, d. h. zu große Steigerungsänderungen, erkennen. Eine Steigerungsänderung oberhalb eines Schwellwertes ist als Einfluss von einem nicht dargestellten Hindernis zu werden. Wird ein Hindernis erkannt, besteht die Möglichkeit, dass die Klappe durch eine Umkehrung der Drehrichtung der Antriebseinrichtung wieder geöffnet wird.

Der Schließwinkel der Klappe im Eingriffsbereich des Klappenschlosses wird nicht sensiert, da in diesem Winkelbereich größere Unstetigkeiten in der Klappenbewegung vorliegen, die sich nur mit einem unverhältnismäßigen Aufwand ausfiltern lassen.

Die Fig. 2 zeigt insbesondere die Antriebseinrichtung 17, die neben einem Elektromotor 33 eine elektromagnetisch schaltbare Kupplung 35 aufweist. Der Kupplung ist mindestens eine Getriebestufe 37 nachgeschaltet, die wiederum die Wickeleinrichtung 23 für die Seileinrichtung 19 antreibt. Der Wickeleinrichtung ist ein Federspeicher 39 beigeordnet, die bei geöffneter Kupplung die Wickeleinrichtung in Aufwickelrichtung antreibt. Bei dem Federspeicher kann es sich beispielsweise um eine Spiralfeder handeln.

Die Seileinrichtung 19 am Kolben-Zylinderaggregat 7 ist in der Fig. 2 optional abweichend von der Fig. 1 ausgeführt. Im Ausführungsbeispiel gemäß der Fig. 2 wird eine Seilführung 41 eingesetzt, die einerseits eine Seilhülle 43 der Seileinrichtung 19 abstützt und einen Befestigungspunkt 45 für ein innerhalb der Seilhülle verlaufendes Seil bietet. Ausgehend von der Seilhülle verläuft das Seil 47 über eine Umlenkrolle 49, die in Wirkverbindung mit dem Zylinder 13 steht, zum Befestigungspunkt 43, so dass das Seil einen Flaschenzug bildet.

Wie man auch aus der bildlichen Darstellung erkennen kann, läuft die Seilhülle zwischen einem Eingangsteil 51 der Wickeleinrichtung 23 und der Seilführung in einem Bogen.

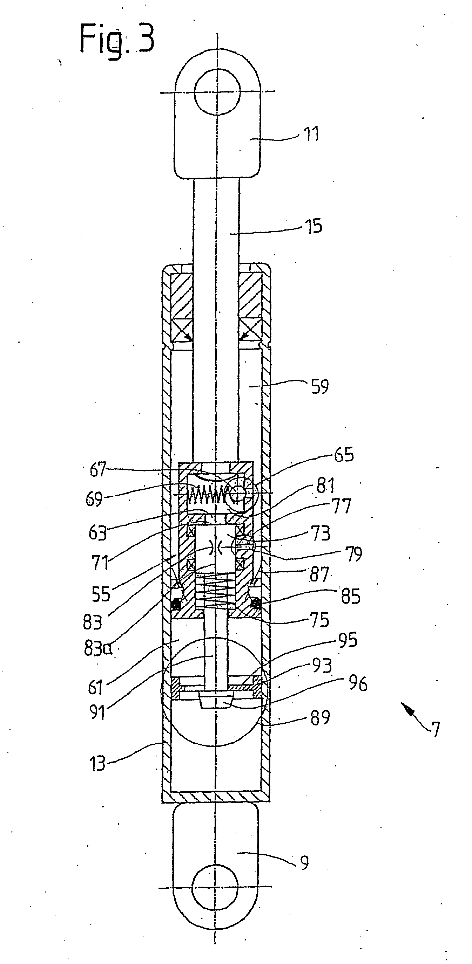

Die Fig. 3 zeigt das Kolben-Zylinderaggregat 7, das den Zylinder 13 aufweist, in dem ein Kolben 55 an der Kolbenstange 15 den Zylinder in einen oberen und einen unteren Arbeitsraum 59; 61 unterteilt. Der Zylinder ist mit einem Arbeitsmedium, einem Gas oder einer Flüssigkeit gefüllt, wobei für den Einsatz einer Flüssigkeit ein Ausgleichsraum für das Volumen der ein- und ausfahrenden Kolbenstange bereitgestellt werden muss. Von einem Kolbenzylinder dieser Bauart muss nur ein Exemplar für die Funktion der Arretierung einer Zwischenstellung der Klappe 3 verwendet werden.

Zwischen den beiden Arbeitsräumen besteht eine erste Strömungsverbindung 63, die von einem zweistufigen Schaltventil angesteuert wird. Sie kann von einem ersten Ventil 65 mit einem Ventilkörper 67 gegen die Schließkraft einer ersten Feder 69 von einem Betriebsdruck im Arbeitsraum 59 freigegeben werden. Das erste Ventil 65 entspricht in seinem Aufbau einem Rückschlagventil. Im weiteren Strömungsweg ist eine Steuerfläche 71 eines zweiten Ventilkörpers 73 angeordnet, wobei der zweite Ventilkörper mit einer zweiten Feder 75 ein zweites Ventil 77 bildet. Der zweite Ventilkörper ist als Ventilschieber ausgeführt, der einen Bypass 79 zu der Strömungsverbindung 63 freigibt oder verschließt. Die erste Strömungsverbindung 63 und der geöffnete Bypass 79 werden in einem Sammelraum 81 zusammengeführt. Die Volumenströme des ersten und des zweiten Ventils werden im weiteren durch einen Abschnitt 63a der Strömungsverbindung in den unteren Arbeitsraum 61 abgeleitet.

Innerhalb des Abschnitts 63a der Strömungsverbindung 63 ist eine Drosselstelle 83 installiert, die ein nennenswertes Druckgefälle zwischen der Steuerfläche 71 und der gegenüberliegenden Stirnfläche erzeugt.

Bei der Benutzung, d. h. einer Ausfahrbewegung der Kolbenstange 15, s. Fig. 2, öffnet sich das erste Ventil 65 aufgrund des Staudrucks vor dem ersten Ventilkörper 67. Die Drosselstelle hat vor der Steuerfläche 71 ebenfalls einen Staudruck wirksam werden lassen, der den zweiten Ventilkörper 73 in die eingezeichnete Schaltstellung bewegt, bei der der Bypass 79 eine Anbindung zum Sammelraum eingeht. In Abhängigkeit der Drosselwiderstände zwischen dem ersten und dem zweiten Ventil kann das erste Ventil eine geschlossene Schaltstellung einnehmen, ohne dass davon das Betriebsverhalten von dem zweiten Ventil 77 und damit dem gesamten Feststeller beeinflusst wird.

In Einfahrrichtung werden beide Ventile 65; 77 von den jeweiligen Federn 69; 75 verschlossen. Damit die Kolbenstange des Feststellers wieder eingeschoben werden kann, verfügt der Kolben 55 über einen Schaltring 85, der eine Überdruckverbindung 87 zwischen den beiden Arbeitsräumen 59; 61 freigibt. Oberhalb einer definierten Einschubkraft wird der Schaltring reibkraftgesteuert in eine vertiefte Schaltringnut 35a bewegt, die den ansonsten dichtenden Schaltring hinterströmen lässt.

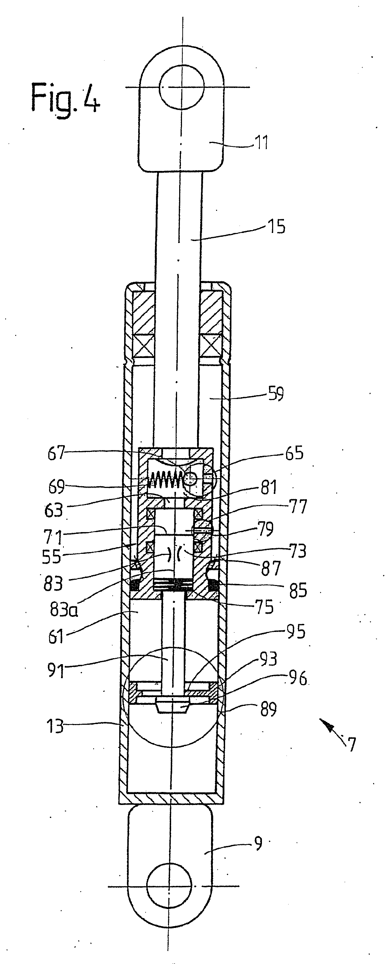

Die Figuren 3 und 4 zeigen eine Öffnungseinrichtung 89, die aus einem Ventilstößel 91 des zweiten Ventils 77 und einer am Zylinder 13 befestigten Halteeinrichtung 93 besteht, wobei die Halteeinrichtung mindestens ein Federelement 95 in der Form einer Federzunge aufweist. Ein Absatz 96 greift an dem mindestens einen Federelement 95 an. Der Sinn der Öffnungseinrichtung liegt darin, dass unabhängig von den Staudrücken an den Ventilen 55; 77 eine Öffnungsbewegung des zweiten Ventils 77 erreicht wird, um eine kraftarme Deblockierung des Feststellers zu erreichen, da der erhöhte Kraftaufwand für die Öffnung des ersten Ventils 55 entfällt.

Bei einer Ausfahrbewegung der Kolbenstange bzw. des Kolbens wird der Ventilstößel 91 zunächst von dem Federelement 95 festgehalten. Eine weitere auftretende Relativbewegung zwischen dem Ventilstößel und dem Kolben entspricht der Öffnungsbewegung des zweiten Ventils 77. Ist das zweite Ventil 77 geöffnet, dann übersteigt die Federkraft der Feder 75 des zweiten Ventils die Haltekraft des Federelementes 95, das dann am Absatz 96 abgleitet und damit außer Eingriff ist. Bei einer Einfahrbewegung durchdringt der Absatz mit seiner konischen Mantelfläche das Halteelement. Der zweite Ventilkörper kann dabei mit seiner Steuerfläche 71 auf Anschlag gehen, ohne das ein Einfluss auf die Einschubbewegung auftritt, da der Schaltventilring 85 die Überdruckverbindung 87 freigegeben hat und damit das erste und zweite Ventil überbrückt sind.

Die Öffnungseinrichtung ist bevorzugt der maximalen Einfahrstellung des Feststellers zugeordnet, damit bei einer Anwendung des Feststellers bei einer größeren Klappe diese aus der geschlossenen Position mit einem minimalen Kraftaufwand geöffnet werden kann.

Im Zusammenhang mit den anderen Komponenten des Betätigungssystems ergibt sich folgendes Betriebsverhalten:

Sobald die Antriebseinrichtung 17 stromlos ist, wird die Kupplung 35 geöffnet und das Kolben-Zylinderaggregat 7 steht unter dem Betriebsdruck in Öffnungsrichtung der Klappe 3. Solange keine äußere Kraft auf die Klappe 3 einwirkt, hält das Kolben-Zylinderaggregat die Klappe fest, da beide Ventile 55, 77 und der Schaltring 85 die Verbindung zwischen den Arbeitsräumen 59; 61 blockieren. Die Antriebseinrichtung oder das Getriebe 37 sind unbelastet. Bei einer Schließbewegung aufgrund der äußeren Kraft der Antriebseinrichtung wird der Schaltring 85 in die Schaltringnut bewegt und kann hinterströmt werden. Liegt die äußere Kraft nicht mehr an, so nimmt der Schaltring 85 wieder seine Blockierfunktion auf. Damit kann mit einem sehr einfachen Aufwand eine von der Antriebseinrichtung unabhängige Blockierung der Klappe erreicht werden.

Wenn man ein Kolben-Zylinderaggregat nach der DE 198 20 404 A1, der Inhalt dieser Patentanmeldung soll Teil dieser Beschreibung sein, einsetzt, dann werden bei einer stromlosen Antriebseinrichtung sogar beide Bewegungsrichtungen von dem Kolben-Zylinderaggregat 7 zuverlässig blockiert.

Das Kolben-Zylinderaggregat verfügt über eine Öffnungscharakteristik, bei der zuerst eine größere Deblockierkraft und anschließend eine kleine Offenhaltekraft des zweiten Ventils 77 zu überwinden ist. Im Zusammenhang mit dieser Öffnungscharakteristik bestehen für das Betätigungssystem zwei Möglichkeiten der Gestaltung eines Einklemmschutzes.

So kann man den Schwellwert, der ein Hindernis signalisieren soll, derart hoch ansetzen, dass die Deblockierkraft überwunden wird.

Alternativ besteht die Möglichkeit, dass man zwei Schwellwerte einsetzt. Ein erster Schwellwert repräsentiert die Deblockierkraft für das erste Ventil 65 und ein zweiter Schwellwert steht für die Offenhaltekraft des zweiten Ventils 77. Wenn die Klappe aus dem Stillstand von dem Betätigungssystem in Bewegung gesetzt wird, dann wird bis zum Erreichen einer definierten Schließgeschwindigkeit der erste Schwellwert als Grenzwert für die Hinderniserkennung eingesetzt. In der Bewegung kann man bei geöffnetem zweiten Ventil 77 den deutlich kleineren Schwellwert verwenden und damit die Sensibilität der Hinderniserkennung deutlich steigern.

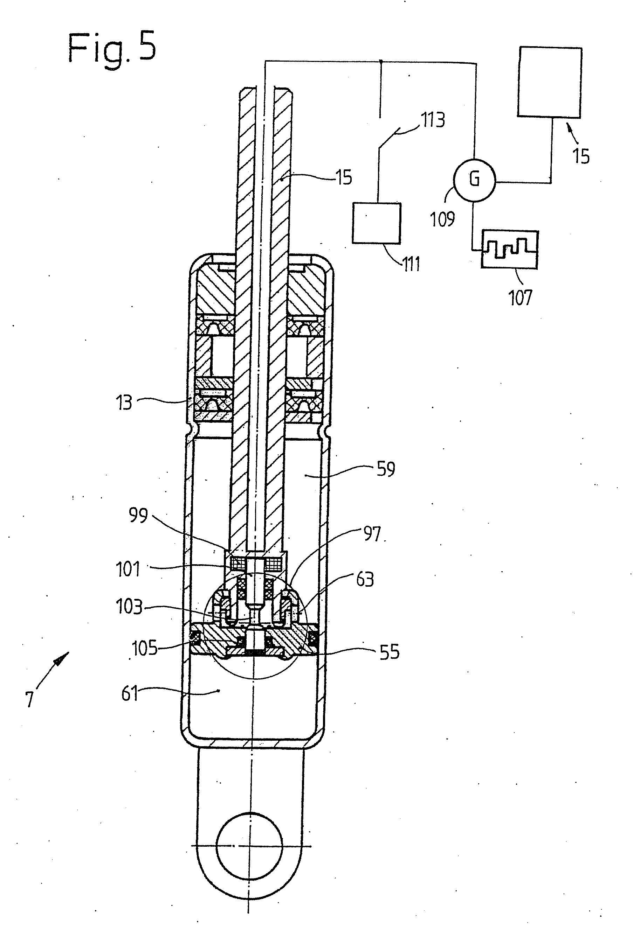

Die Fig. 5 zeigt das Kolben-Zylinderaggregat 7, in einer Ausführung, bei der die Strömungsverbindung 63 zwischen den Arbeitsräumen 59; 61 von einem elektromagnetisch angesteuerten Schaltventil 97 betätigt wird. An der Kolbenstange 15, ob innerhalb oder außerhalb des Zylinders 13 ist als Aktuator eine Magnetspule 99 angeordnet, die auf einen Anker 101 eine Verstellkraft für eine Betriebsbewegung ausübt. In diesem Fall wird ein axial beweglicher Anker verwendet, ein Drehanker ist ebenfalls denkbar. Im stromlosen Zustand der Magnetspule 99 wird der Anker 101 vom Betriebsdruck innerhalb des Kolben-Zylinderaggregates in die geschlossene Betriebsstellung bewegt. In der Durchlass-Stellung befindet sich eine Einschnürung 103 des Ankers in Überdeckung mit einer Dichtung 105 und kann umströmt werden.

Die Magnetspule 99 ist mit zwei Stromquellen verbindbar. Zum einen steht die Stromversorgung über einen vom Antriebsmotor 107 betriebenen Generator 109 zur Verfügung, der für die gesamte Stromversorgung im Fahrzeug verwendet wird. Des weiteren ist die Stromversorgung von einer Batterie 111 parallel geschaltet und kann selektiv über einen Schalter 113 genutzt werden.

Beim laufenden Antriebsmotor 107 wird das Betätigungssystem mit Strom vom Generator 109 versorgt und man kann damit die Klappe bewegen, insbesondere bei einem Betätigungssystem mit einer Seileinrichtung schließen. Wird der Antriebsmotor abgestellt und man möchte eine bestimmte Zwischenstellung des beweglichen Teils, der Klappe 3 festsetzen lassen, dann kann man über den Schalter 113 die Magnetspule 99 ansteuern und die Strömungsverbindung 63 zwischen den Arbeitsräumen 59; 61 öffnen, wodurch die Klappe 3 eine Ausschubbewegung ausführt, da das Blockiermedium innerhalb des Zylinders 13 eine Ausschubkraft auf die Kolbenstange 1 5 ausübt. Wenn man die Klappe in die gewünschte Stellung gebracht hat und den Schalter 113 wieder öffnet, dann wird der Anker 101 des Schaltventils vom Betriebsdruck wieder in die Blockierposition gebracht. Damit ist die gewünschte Stellung der Klappe ohne den Einsatz von Fremdenergie fixiert. Für den Schalter bietet es sich an, einen Taster zu verwenden, um bei fahrlässiger Verwendung des Schalters die Batterie nicht überzustrapazieren.

Für den sicherlich sehr seltenen Fall, dass der Motor nicht startfähig und die Batterie 111 soweit entleert ist, dass eine Stromversorgung der Magnetspule nicht mehr gewährleistet ist, lassen sich nicht dargestellte Überdruckventile für jede Strömungsrichtung zwischen den Arbeitsräumen öffnen. Die Überdruckventile sind im Hinblick auf den Öffnungsdruck derartig ausgelegt, dass eine deutliche Trennung zwischen einem normalen Druckniveau zur Erfüllung der Haltefunktion und einem Notbetrieb vorliegt, bei dem die Überdruckventile durch eine äußere Kraft auf die Klappe "überdrückt" werden.

## Patentansprüche

1. Betätigungssystem, umfassend ein Basisteil und ein zu bewegendes Teil, das von einem unter einer Druckvorspannung stehende Kolben-Zylinderaggregat bewegbar ist, das einen Zylinder und eine Kolbenstange umfasst, wobei ein Kolben an der Kolbenstange den Zylinder in zwei Arbeitsräume unterteilt, wobei das Basisteil eine fremdenergiegesteuerte Antriebseinrichtung aufweist, die in Wirkverbindung mit dem zu bewegenden Bauteil steht und gegen die Betriebskraft des Kolben-Zylinderaggregats funktioniert, wobei ein Steuerungssystem die Bewegung des zu bewegenden Systems überwacht und ein Hindernis feststellt, wenn ein die Bewegung repräsentierender Parameter von einem gespeicherten Parameter von einer Schwellgrenze abweicht, wobei im stromlosen Zustand des Betätigungssystems das zu bewegenden Bauteil mit Hilfe einer Blockiereinrichtung gehalten wird,
**dadurch gekennzeichnet,**
**dass** die Blockiereinrichtung von dem Kolben-Zylinderaggregat (7) gebildet wird, indem über ein Schaltventil (65, 77) eine Strömungsverbindung (63) zwischen den Arbeitsräumen (59; 61) blockierbar ist,
**dass** das Schaltventil (65, 77) ein zweistufiges Öffnungsverhalten aufweist, indem nach Überwinden einer grösseren Deblockierkraft mit einer geringeren Offenhaltkraft eine Betriebsbewegung des Kolben-Zylinderaggregates (7) ausgeführt werden kann, und
**dass** das Kolben-Zylinderaggregat (7) ferner eine Öffnungseinrichtung (89) umfasst, welche bei einer anfänglichen Bewegung des Kolben-Zylinderaggregats (7) aus einer maximalen Einfahrstellung heraus das Schaltventil (65, 77) unabhängig von einem an diesem wirkenden Staudruck öffnet, um das Kolben-Zylinderaggregat (7) kraftarm zu deblockieren.

2. Betätigungssystem nach Anspruch 1, **dadurch gekennzeichnet, dass** das Steuersystem (29) unabhängig von einer Zwischenstellung die Schwellwertgrenze derart verschiebt, dass die Deblockierkraft von der Antriebseinrichtung (17) überwunden wird.

3. Betätigungssystem nach Anspruch 1, **dadurch gekennzeichnet, dass** das Steuersystem (29) mindestens zwei Schwellwertgrenzen aufweist, wobei ein Schwellwert für ein Hindernis während der Bewegung des beweglichen Teils (3) und ein zweiter Schwellwert von der Antriebseinrichtung (17) überwunden wird, wenn das Teil (3) aus dem Stillstand in Bewegung gesetzt wird.
